# EUROPEAN PATENT SPECIFICATION

(11) **EP 1 521 104 B1**
(45) Date of publication and mention of the grant of the patent: **20.12.2006**
(21) Application number: 03292439.1
(22) Date of filing: 02.10.2003
(51) Int. Cl.: G02B 5/04, G02B 3/00, G02B 26/08

(54) **Improvements to an image projector**
Verbesserungen einer Bildprojektor
Améliorations à un projecteur d'images

(43) Date of publication of application: 06.04.2005
(73) Proprietor: Thomson Licensing, 92100 Boulogne-Billancourt (FR)
(72) Inventor: Chikawa, Yoshiharu, Yokohama 221 (JP)
(74) Representative: Ruellan-Lemonnier, Brigitte

(56) References cited:
- EP-A- 1 202 096
- EP-A- 1 387 205
- US-A1- 2002 093 743
- US-A1- 2003 099 039
- US-B1- 6 343 862

## Description

The invention relates to an image projector comprising an image device and an optical device to project the points of the image provided by the image device on a screen.

The image device is, for instance, a liquid crystal element, or a LCOS (Liquid Crystal On Silicon), or a digital mirror device DMD.

In this kind of projector, which is currently used for displaying television images or images from a computer, the position of the optical arrangement, which projects on the screen with a greater size, the image generated by the image device, must be carefully adjusted, i.e. the optical arrangement must be at a given distance from the image device and at an other given distance from the screen. It is the reason why such projectors are generally heavy and bulky.

Document EP1202096 entitled "Microelectrical mechanical structure (MEMS) optical modulator and optical display" discloses on figure 19 a display system. This system includes a MEMS and a microlens array that focuses an incident beam on a screen. Indeed, this system is related to the improvement of image quality or manufacturing process and does not address the problem of big size of projectors.

One object of the invention is to provide an image projector which can be compact and/or light.

In the projector according to the invention, the optical arrangement comprises an array of light deviation elements, each element, such as a prism or a mirror, being associated to a pixel or a sub-pixel of the image device in order to provide the image of the corresponding pixel or sub-pixel on the screen.

As the light deviation elements are not necessarily image forming devices, such as lenses, there is no constraint on the location of such elements. In an embodiment, the array of light deviation elements is located close to the image device.

The light rays coming from the pixels of the image forming device, may be parallel and such parallel rays are deviated by each light deviation element.

In an other embodiment, a lens is associated to each pixel or sub-pixel, for instance between the image device and the light deviation array, in order to focus on the screen the light coming from each pixel or sub-pixel and deviated by the light deviation element.

When each sub-pixel corresponds to a given colour of a pixel and when a prism is used for deviating the light, it will be appreciated that no correction is necessary due to the dispersion of light in a prism, because each prism is used only for a given colour, i.e. for a small range of wavelengths.

In an embodiment, the angle of deviation of each light deviation element is controllable in order to control parameters of the image on a screen, such as the part of the image to be displayed (zoom function), the aspect ratio (for instance 4:3 or 16:9) of the image and/or adjustment parameters in order to take into account the position of the screen with respect to the optical arrangement, for instance the screen tilt angle and offset values, and also in order to take into account the curvature of the screen.

The use of lenses in combination with light deviation elements is useful for improving the contrast and sharpness of the image, because, for a given light intensity on the screen, the smaller is each point, the better is the contrast or sharpness.

When the aspect ratio is controlled by the deviation angle of each light deviation element, it is possible to keep the best resolution. For instance, if a 16:9 high-definition image device is used with a projector of standard aspect ratio of 4:3 with a smaller definition, all pixels of the image device may be used, for instance by using a known resolution conversion device (currently available for high definition TV sets). Therefore the picture quality is improved, more particularly inclined lines, which appear generally as corrugated, are smoothed.

In brief, the invention concerns a projector comprising an imaging device, and an optical arrangement for projecting images of the imaging device on a screen, wherein to each pixel or sub-pixel of the imaging device is associated a light deviation element which deviates the light coming from the corresponding pixel or sub-pixel in order to deviate the light coming from this corresponding pixel or sub-pixel in such a way that this pixel or sub-pixel has a given location on the screen.

The light deviation element may comprise a prism and/or a mirror.

In an embodiment, the optical arrangement comprises two sets of prisms, the top edges of the prisms on the first set being parallel, the second set of top edges of the prisms of the second set being also all parallel but perpendicular to the top edges of the first set. In that case, the first set may be formed on a first plate and the second set may be formed on the second plate.

The first and second sets of prisms may also be formed on the two different main faces of the same plate.

In an embodiment, the light deviation angle of each element is controllable, for instance in view of at least one of the following parameters: the size of the image, the selection of the fraction of the image to be displayed, the curvature of the screen, the position of the screen.

In an embodiment, to each light deviation element is associated a lens in order to provide a given dimension to each light beam projected on the screen corresponding to each pixel or sub-pixel.

Means may be provided for controlling the position of the lenses.

The projector may also comprise two sets of elongated lenses, the first set having an elongation axis along one direction and the second set having an elongation axis along a second direction perpendicular to the first direction.

Other features and advantages of the invention will appear with the description of certain of its embodiments, this description being made in connection with the following drawings, wherein:
- figure 1 is a schematic drawing of a first embodiment of the invention,
- figures 2 to 5 represent several embodiments of an optical arrangement of the image projector represented on figure 1,
- figure 6 represents another embodiment of an image projector according to the invention,
- figure 7 represents a further embodiment of the projector represented on figure 6,
- figures 8 and 9 are schematic drawings showing the operation of the projector represented on figure 7,
- figure 10 represents another embodiment of the optical arrangement for the projector of figure 6 or 7,
- figure 11 represents a variation of figure 10, and
- figures 12-17 represent also other embodiments for the optical arrangement of a projector of the kind represented on figure 6 or 7.

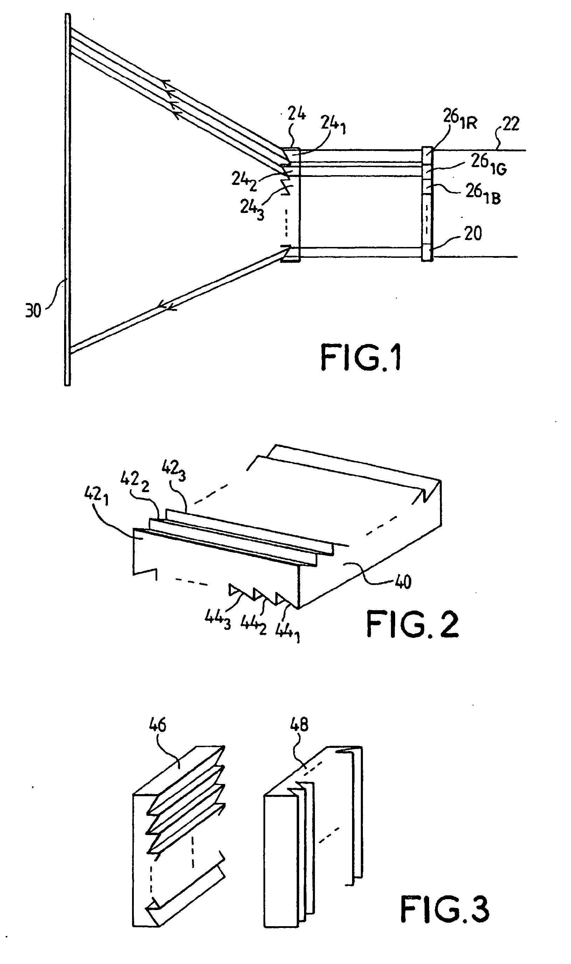

In the embodiment represented on figure 1, a projector comprises an imaging device 20 of the liquid crystal type comprising a plurality of pixels and each pixel has three sub-pixels, for instance one red, one green and one blue. The imaging device receives on its rear face a parallel beam of light 22 which, after having crossed the imaging device 20 is modulated by the image.

The projector represented on figure 1 comprises, according to the invention, a prism array 24 with a plurality of individual prisms with each prism corresponding to a given sub-pixel. In this example, the prism 24₁ is associated to sub-pixel 26_{1R} (red), the prism 24₂ is associated to the sub-pixel 26_{1G} (green) and the prism 24₃ is associated to the sub-pixel 26_{1B} (blue). The position of the prism array 24 with respect to the imaging device 20 is such that a light ray coming from a given sub-pixel impinges only on the corresponding prism. This means that the prism 24₁ receives only light from the sub-pixel 26_{1R}, prism 24₂ receives light only from sub-pixel 26_{1C} and prism 24₃ receives light only from sub-pixel 26_{1B}.

In this way, each prism deviates each sub-pixel in a given direction corresponding to the position of the corresponding sub-pixel on a screen 30. As each prism deviates only one colour, there is practically no dispersion of light due to the prism.

Each prism may be realised independently from the others. However, in the embodiments represented on figures 2 and 3, it appears that the array may be formed of an array of prisms for deviating in the horizontal direction and an array of prisms for deviating in the vertical direction. For instance, as shown on figure 2, on one face of a plate 40 are formed prisms 42₁, 42₂, 42₃, etc., which deviate light rays in the vertical direction. After having crossed one prism, the light rays cross other prisms on the other face of the plate 40, i.e. prisms 42₁, 42₂, 42₃, etc, which deviate the light rays in the horizontal direction.

In the embodiment shown on figure 3, two different plates 46, 48 are used. The plate 46 has a set of prisms with horizontal top edges in order to deviate vertically the light rays and the second plate 48 has prisms with vertical top edges which deviate horizontally the light rays.

The prism plates may have the same or different dimensions.

The plate 40 or the plate 46 or 48 may be located against the imaging device or very close to this imaging device 20.

In an embodiment (not shown) for one direction, a prism array is used and for the other direction, a mirror array is used.

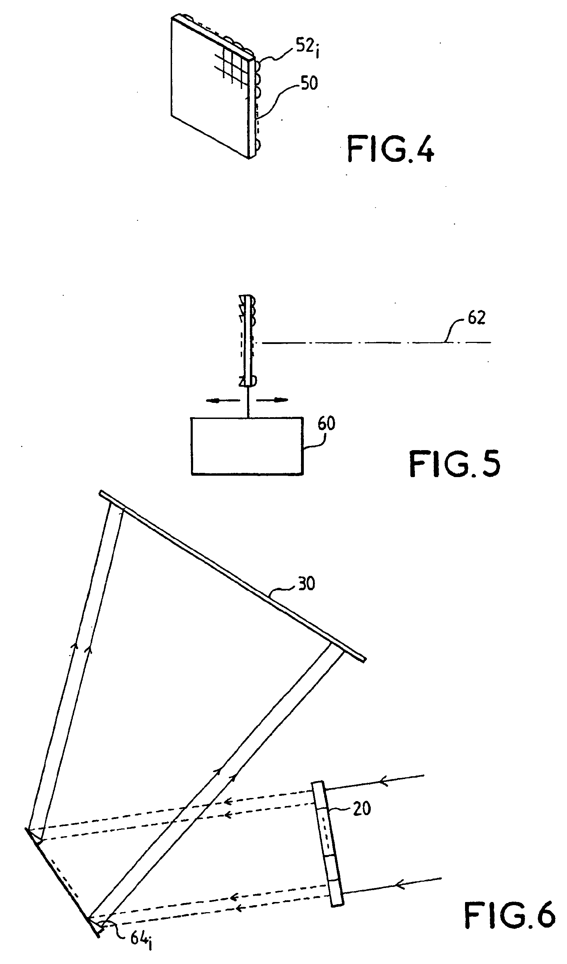

In the embodiment shown on figure 4, the prism array is associated with lenses. Each lens is associated to a prism, i.e. to a pixel or a sub-pixel in order to focus an image of each pixel or sub-pixel on the screen. As shown in this embodiment, a plate or a sheet 50 bears fly-eye lenses 52ᵢ and this plate 50 is in contact with a plate 52 bearing a prism array or a double prism array. As already explained for this embodiment, the dimensions of each pixel is, for the same light energy, smaller on the screen compared to the embodiment where parallel rays emerge from each prism as shown on figure 1. Therefore, the contrast is improved in a bright room.

In another embodiment, concave lenses are used.

When using lenses 52ᵢ, it may be necessary to have a control mechanism 60 (figure 5) for obtaining the correct focusing on the screen. In this case, the control mechanism 60 is able to translate the prism array and fly eye lenses along the optical axis 62 which is perpendicular to the plane of the imaging device 20.

The control mechanism 60 may be used not only to focus the corresponding sub-pixels on a screen but also to control the dimension of each point projected on the screen. In fact, the dimensions of each point on the screen according to the contrast which is necessary.

The control mechanism 60 may be of the auto-focus type or may be a mechanism to assist a manual control.

In the embodiment shown on figure 6, instead of prisms, micro-mirrors 64ᵢ are used, each micro-mirror 64ᵢ corresponding to a sub-pixel, exactly like each prism corresponds to a sub-pixel in the embodiment disclosed with figure 1. The relative position of each micro-mirror is such that it reflects the ray it receives from the corresponding sub-pixel of the device 20, at the correct position on the screen 30.

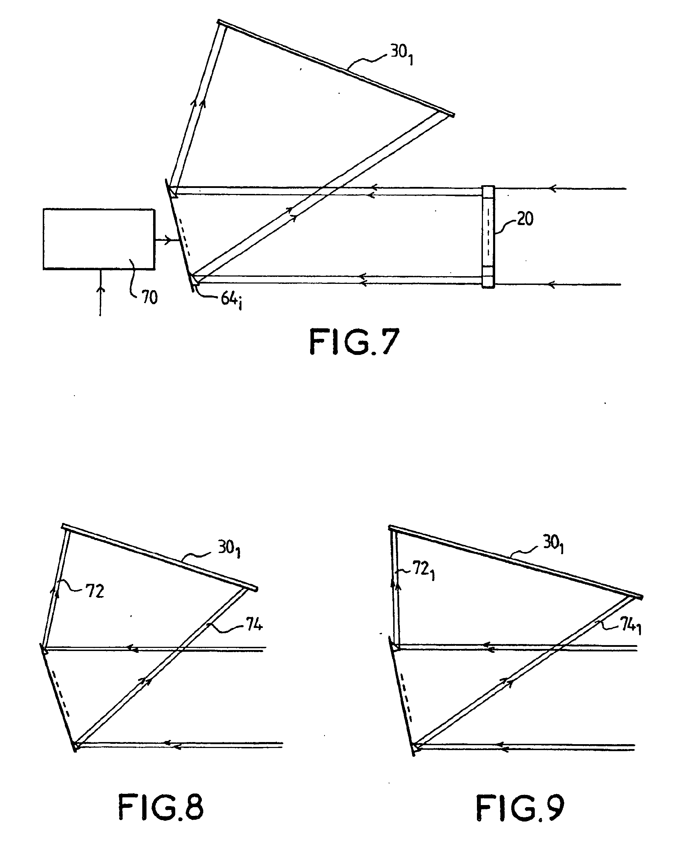

In the embodiment shown on figure 7, the position of each mirror is controlled by a mirror array controller 70, in view of at least one of the following parameters:
- the part of the image to be displayed: either the whole image may be displayed or a part of this image may be displayed in order to zoom on some parts of said image;
- parameters about the position and shape of the screen such as the horizontal and vertical tilt angles, the horizontal and vertical offset values and the parameters relating to the shape of the screen, more particularly the curvature of said screen. With these last parameters, it is possible to compensate picture distortion which might be due to the position of the screen or to its shape;
- the aspect ratio of the image. More precisely, with the mirror array controller 70, it is possible to provide either a 16:9 image or a 4:3 image. For instance, if the imaging device 20 is a high definition imaging device with an aspect ratio of 16:9 with 1220x1080 pixels and if the projector is of the 4:3 standard definition picture 640x480, it is possible to use all pixels of the imaging device 20.

The mirrors 64ᵢ may be of the type as produced by the Company MEMS OPTICAL.

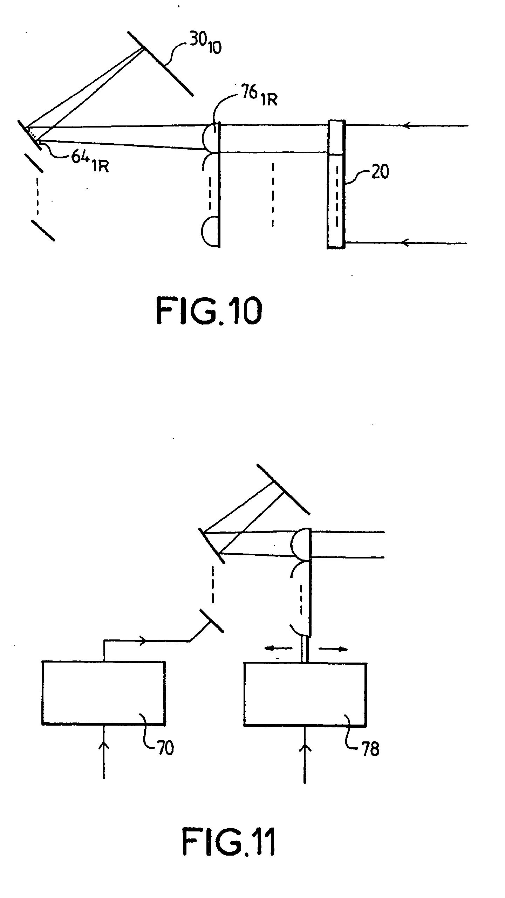

Figure 8 and figure 9 show the effect of controller 70. In figure 8 the angle between end rays is smaller than the angle between end rays 72 and 74₁ on figure 9.

On figures 7, 8 and 9 the light rays coming from the imaging device 20 are parallel and remain parallel until they are projected on the screen 30₁.

In the other embodiments shown on figure 10-15 fly-eye lenses are used in order to control the dimensions of each pixel or sub-pixel on the screen.

In the embodiment shown on figure 10, one lens 76_{1R} is associated to one sub-pixel of the imaging device 20 and to this sub-pixel and to this lens corresponds one mirror 64_{1R}.

In an other embodiment, one mirror corresponds to all the sub-pixels (three or more) of one pixel.

As shown, the lenses and the mirrors focus each sub-pixel on the screen 30₁₀.

In the embodiment shown on figure 11, the position of the lenses 76 is controlled by a control device 78 in order to adjust the size of each pixel or sub-pixel projected on the screen. In this way, it is possible to control the sharpness of the image and/or to adapt the size of the pixels to the "black matrix" pattern which may be present on the screen. The control device 78 may be a mechanism for manually adjusting the position of the lenses 76 or may be an automatic focusing device.

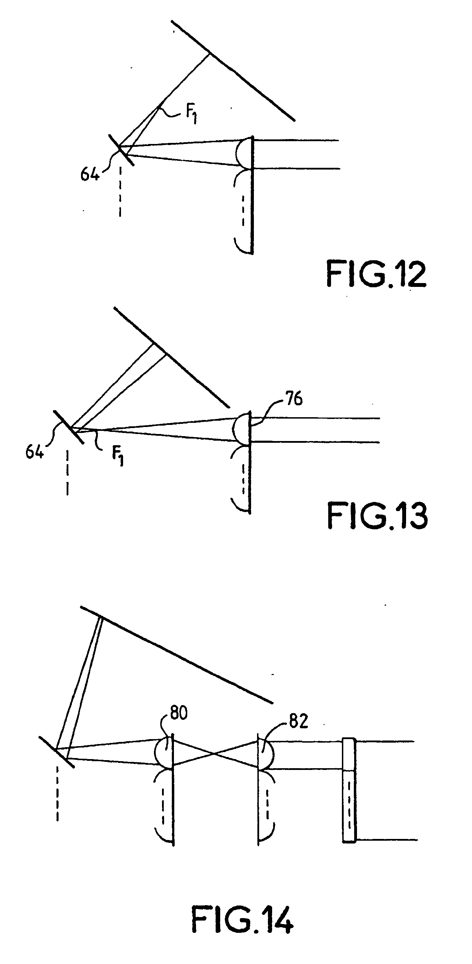

It is to be noted that the focusing point is not necessarily on the screen. This focusing point F₁ may be either between the mirrors 64 and the screen (figure 12) or between the lenses 76 and the mirrors 64 (figure 13). These embodiments are advantageous with small diameter lenses having short local length. If the focusing position is upon the mirror, or very close to the mirror, it is possible to make the mirror smaller.

In contrast to the embodiment shown on figure 10-13, where a lens 76 corresponds to a sub-pixel or to a pixel, in the embodiment shown on figures 14-17, each lens is the combination of two cylindrical lenses, i.e. a horizontal cylindrical lens 80 and a vertical cylindrical lens 82. As shown on figures 14, 15 and 17, the horizontal and vertical cylindrical lenses are formed on two different sheets.

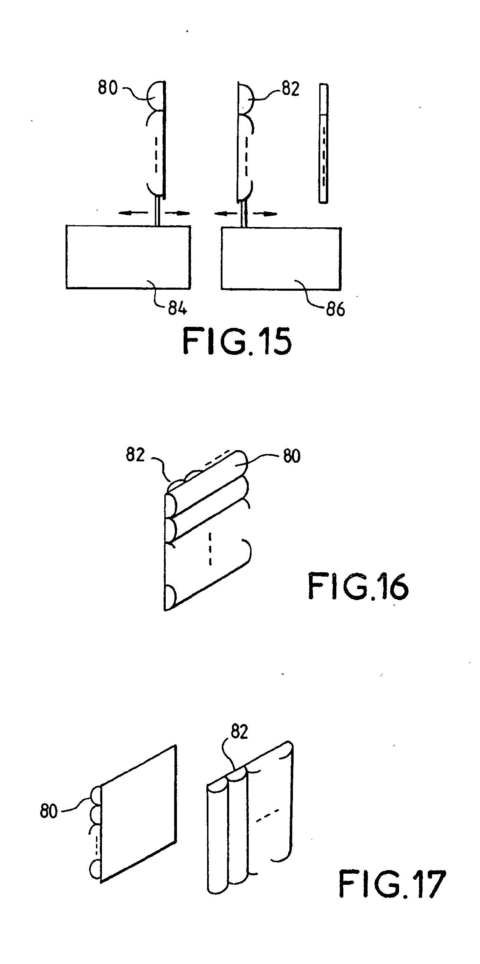

In the embodiment shown on figure 16, the two sets of cylindrical lenses are formed on the same plate or sheet.

When two different plates are used for forming the horizontal and vertical cylindrical lenses, it is possible to control separately the position of each plate bearing the horizontal and vertical lenses, as represented by control devices 84 and 86 on figure 15.

It is to be noted that the imaging device may be located between the two sets of lenses 80 and 82. It is also possible to locate the lenses before the imaging device. When the focusing spot size is controlled individually in vertical and horizontal directions, it is possible to control individually the black stripes width on the screen. This may be used if the aspect ratio and resolution of the image device is not the same as the image signal.

With the embodiments shown on figures 7-17, like with the other embodiments, it is possible to realize a light and compact projector. Moreover, the control mechanism for the focus and dimension of the image is simpler than with the prior art. When the projection angle is changed compared to the known devices, the modification is faster and less noisy. The sharpness and contrast of the projector may be easily controlled.

## Claims

1. A projector comprising an imaging device (20), and an optical arrangement for projecting images of the imaging device on a screen (30), **characterized in that**
to each pixel or sub-pixel of the imaging device is associated a light deviation element (24) which deviates the light coming from the corresponding pixel or sub-pixel in order to deviate the light coming from this corresponding pixel or sub-pixel in such a way that this pixel or sub-pixel has a given location on the screen.

2. A projector according to claim 1 wherein the light deviation element comprises a prism or a mirror.

3. A projector according to claim 2 wherein the optical arrangement comprises two sets of prisms, the top edges of the prisms on the first set being parallel, the second set of top edges of the prisms of the second set being also all parallel but perpendicular to the top edges of the first set.

4. A projector according to claim 3 wherein the first set is formed on a first plate and the second set is formed on the second plate.

5. A projector according to claim 3 wherein the first and second sets of prisms are formed on the two different main faces of the same plate.

6. A projector according to any of the previous claims wherein the light deviation angle of each element is controllable.

7. A projector according to claim 6 comprising means to control the angle of each light deviation element in view of at least one of the following parameters: the size of the image, the selection of the fraction of the image to be displayed, the curvature of the screen, the position of the screen.

8. A projector according to any of the previous claims wherein to each light deviation element is associated a lens in order to provide a given dimension to each light beam projected on the screen corresponding to each pixel or sub-pixel.

9. A projector according to claim 8 comprising means for controlling the position of the lenses.

10. A projector according to claim 8 or 9 comprising two sets of elongated lenses, the first set having an elongation axis along one direction and the second set having an elongation axis along a second direction perpendicular to the first direction.

## Patentansprüche

1. Projektor, der eine Bildgebungseinrichtung (20) und eine optische Anordnung zum Projizieren von Bildern der Bildgebungseinrichtung auf einen Schirm (30) projiziert, **dadurch gekennzeichnet, daß**
jedem Pixel oder Subpixel der Bildgebungseinrichtung ein Lichtablenkelement (24) assoziiert ist, das das von dem entsprechenden Pixel oder Subpixel kommende Licht ablenkt, um das von diesem entsprechenden Pixel oder Subpixel kommende Licht derart abzulenken, daß dieses Pixel oder Subpixel eine gegebene Stelle auf dem Schirm aufweist.

2. Projektor nach Anspruch 1, wobei das Lichtablenkelement ein Prisma oder einen Spiegel umfaßt.

3. Projektor nach Anspruch 2, wobei die optische Anordnung zwei Sätze von Prismen umfaßt, wobei die oberen Ränder der Prismen in dem ersten Satz parallel sind, der zweite Satz von oberen Rändern der Prismen des zweiten Satzes ebenfalls alle parallel sind, aber senkrecht zu den oberen Rändern des ersten Satzes.

4. Projektor nach Anspruch 3, wobei der erste Satz auf einer ersten Platte und der zweite Satz auf der zweiten Platte ausgebildet ist.

5. Projektor nach Anspruch 3, wobei der erste und zweite Satz von Prismen auf zwei verschiedenen Hauptflächen der gleichen Platte ausgebildet sind.

6. Projektor nach einem der vorhergehenden Ansprüche, wobei der Lichtablenkwinkel jedes Elements gesteuert werden kann.

7. Projektor nach Anspruch 6, mit Mitteln zum Steuern des Winkels jedes Lichtablenkelements angesichts mindestens eines der folgenden Parameter: der Größe des Bilds, der Auswahl des anzuzeigenden Anteils des Bilds, der Krümmung des Schirms, der Position des Schirms.

8. Projektor nach einem der vorhergehenden Ansprüche, wobei jedem Lichtablenkelement eine Linse assoziiert ist, um jedem auf den Schirm projizierten Lichtstrahl eine jedem Pixel oder Subpixel entsprechende Abmessung zu geben.

9. Projektor nach Anspruch 8, mit Mitteln zum Steuern der Position der Linsen.

10. Projektor nach Anspruch 8 oder 9, mit zwei Sätzen von länglichen Linsen, wobei der erste Satz eine Dehnungsachse entlang einer Richtung und der zweite Satz eine Dehnungsachse entlang einer zu der ersten Richtung senkrechten zweiten Richtung aufweist.

## Revendications

1. Un projecteur comprenant un dispositif d'imagerie (20) et un arrangement optique pour projeter les images du dispositif d'imagerie sur un écran (30), **caractérisé en ce que**
à chaque pixel ou sous-pixel du dispositif d'imagerie est associé un élément de déviation de la lumière (24) qui dévie la lumière provenant du pixel ou sous-pixel correspondant afin de dévier la lumière provenant de ce pixel ou sous-pixel correspondant de sorte que ce pixel ou sous-pixel a une position donnée sur l'écran.

2. Un projecteur selon la revendication 1, dans lequel l'élément de déviation de la lumière comprend un prisme ou un miroir.

3. Un projecteur selon la revendication 2, dans lequel l'arrangement optique comprend deux ensembles de prismes, les bords supérieurs des prismes du premier ensemble étant parallèles, le second ensemble de bords supérieurs des prismes du second ensemble étant également parallèles mais perpendiculaires aux bords supérieurs du premier ensemble.

4. Un projecteur selon la revendication 3, dans lequel le premier ensemble est construit sur une première plaque et le second ensemble est construit sur la seconde plaque.

5. Un projecteur selon la revendication 3, dans lequel les premier et second ensembles de prismes sont construits sur les deux différentes faces principales de la même plaque.

6. Un projecteur selon l'une quelconque des revendications précédentes, dans lequel l'angle de déviation de la lumière de chaque élément est contrôlable.

7. Un projecteur selon la revendication 6, comprenant un moyen pour commander l'angle de chaque élément de déviation de la lumière à l'effet d'au moins un des paramètres suivants : la taille de l'image, la sélection de la fraction de l'image à afficher, la courbure de l'écran, la position de l'écran.

8. Un projecteur selon l'une quelconque des revendications précédentes, dans lequel à chaque élément de déviation de la lumière est associée une lentille afin de fournir une dimension donnée à chaque faisceau lumineux projeté sur l'écran correspondant à chaque pixel ou sous-pixel.

9. Un projecteur selon la revendication 8, comprenant un moyen pour commander la position des lentilles.

10. Un projecteur selon la revendication 8 ou 9, comprenant deux ensembles de lentilles ovales, le premier ensemble ayant un axe d'allongement dans une direction et le second ensemble ayant un axe d'allongement dans une seconde direction perpendiculaire à la première direction.
